# FASCICULE DE BREVET EUROPEEN

(11) **EP 4 451 873 B1**
(45) Date de publication et mention de la délivrance du brevet: **28.10.2026**
(21) Numéro de dépôt: 22844256.2
(22) Date de dépôt: 21.12.2022
(51) Int. Cl.: A01N 25/28, A01P 21/00

(54) **COMPOSITION AGROCHIMIQUE POUR ENROBAGE DE GRAINES**
AGROCHEMISCHE ZUSAMMENSETZUNG ZUR SAATGUTBESCHICHTUNG
AGROCHEMICAL SEED COATING COMPOSITION

(30) Priorité: 21.12.2021 FR 2114084
(43) Date de publication de la demande: 30.10.2024
(73) Titulaire: Melchior Material And Life Science France, 64170 LACQ (FR)
(72) Inventeur: ESCUDIE, Yannick, 64420 Nousty (FR); SORLIN, Tanguy, 64170 Artix (FR); GUERRET, Olivier, 46170 Pern (FR)
(74) Mandataire: Regimbeau
(86) Numéro de dépôt international: PCT/FR2022/052467
(87) Numéro de publication internationale: WO 2023/118751

(56) Documents cités:
- WO-A1-2014/096622
- WO-A1-2016/131883
- US-A1- 2013 065 755

## Description

### DOMAINE TECHNIQUE DE L'INVENTION

La présente invention concerne des compositions et des kits, en particulier agrochimiques, comprenant un composé sémiochimique, et plus particulièrement un composé répulsif vis-à-vis d'insectes ou de nématodes ravageurs, destinés au traitement des semences en vue de leur protection contre des insectes ou nématodes ravageurs. Les compositions et kits selon l'invention permettent en effet de protéger les plantes cultivées, du semis à la levée de la plante, en diffusant dans le sol, de manière prolongée, un composé sémiochimique auquel sont sensibles des insectes et nématodes ravageurs présents dans le sol.

### ETAT DE LA TECHNIQUE

De nombreuses technologies sont actuellement utilisées pour traiter les semences dans le but souhaité d'améliorer les performances des cultures, par exemple en stimulant la croissance des plantes ou encore en protégeant les semences contre des organismes nuisibles et indésirables, tels que les insectes ou les nématodes ravageurs.

Une gamme de traitements fongicides utilisant des liquides et/ou des boues sont utilisées depuis longtemps pour lutter contre les maladies transmises par le sol dans les semences. Les développements récents des traitements des semences se sont concentrés sur l'utilisation de techniques pour administrer des pesticides, en particulier des insecticides, aux semences, notamment via la technique de l'enrobage (dénommé aussi « coating ») des graines de la semence.

Un des problèmes rencontrés avec l'enrobage des semences est l'effet phytotoxique des actifs contenus dans l'enrobage. Ainsi, dans le passé, la concentration des actifs présents dans l'enrobage des semences était limitée. Désormais, l'enrobage lui-même est utilisé comme protection de la graine vis-à-vis de la phytotoxicité des ingrédients actifs, tels que les insecticides. US7836630 et US 2013/065755 décrivent une méthode d'enrobage utilisant un polymère permettant de former une barrière étanche entre la graine et l'actif qui est phytotoxique. De nombreux polymères sont évoqués, dont, entre autres, des polysaccharides naturels, des dérivés de cellulose ou des polymères plus classiques comme des dérivés d'acides polyacryliques ou encore le PVA. Ce document décrit ainsi un enrobage formé en deux étapes par application d'une couche isolante dépourvue de tout actif autour de la graine, suivie de l'application de l'actif. Ainsi, la couche isolante ne joue aucun rôle actif dans le relargage et la diffusion de l'actif, et aucune protection spécifique de l'actif n'est prévue.

WO2011/133765 divulgue une méthode d'encapsulation sensible au pH capable de relarguer un actif quand la graine est exposée à une variation de pH. L'actif peut être un actif phytosanitaire, un attractant ou un répulsif. Toutefois, cette méthode présente l'inconvénient d'être dépendante du pH et d'utiliser un polymère qui génère, en se dégradant dans le sol, des microparticules susceptibles de polluer les sols.

WO2014/062660 divulgue un procédé d'enrobage de graines utilisant un premier polymère pour encapsuler l'ingrédient actif en formant une coque rigide autour de cet ingrédient et un second polymère pour coller à la graine les particules d'ingrédient actif encapsulées et permettre un relargage contrôlé de l'ingrédient actif. Les polymères d'encapsulation utilisés sont des polymères de type SMA (« styrene maleic anhydride », à savoir styrène-anhydride maléique) ou SMI (« styrene maleimide », à savoir styrène-maléimide), des protéines modifiées ou non, ou encore des amidons. L'enrobage est décrit comme biodégradable. Cependant, du fait de l'utilisation de polymère thermoplastique, des microplastiques seront générés dans le sol, ce qui constitue un obstacle au développement de cette technologie.

Ainsi, les agents d'enrobage sont dans la majorité des cas des polymères de types variés, pouvant générer une pollution des sols via la formation de microplastiques notamment.

En outre, l'utilisation même des insecticides dans les enrobages pose des problèmes environnementaux du fait de la rémanence de l'insecticide dans le sol et de sa migration vers les eaux de surface et les nappes phréatiques. En effet, l'insecticide ne se dégrade pas seul, d'où une accumulation dans le temps, dans le sol et dans les eaux.

Des agents répulsifs peuvent être utilisés à la place des actifs agrochimiques de type insecticide. Toutefois, ledit agent répulsif doit être présent au moins pendant la germination de la graine et la levée de la plante. Or, dans la plupart des cas, les agents répulsifs sont volatiles, voire très volatiles, rendant leur efficacité d'assez courte durée. Ainsi, un problème crucial se pose quant à la perte rapide en matière active qui rend inefficace un enrobage contenant un agent répulsif vis-à-vis de la protection de la graine contre les ravageurs du sol.

Il existe donc un besoin de développer de nouveaux traitements, tels que des enrobages, pour semences permettant un traitement efficace dans le temps de ces dernières contre les ravageurs, sans engendrer de problème de phytotoxicité et sans générer de pollution des sols et des nappes phréatiques.

### RESUME DE L'INVENTION

La composition et le kit selon l'invention destinés à l'enrobage des semences permet de résoudre les problèmes évoqués ci-avant. Ils permettent notamment de pallier le problème de phytotoxicité directe de l'actif (c'est-à-dire le composé sémiochimique dans le sens de l'invention) sur les semences, en particulier dans la phase de germination de la graine et de levée de la plante ; le problème de pollution du sol par des polymères plastiques ou par des insecticides ; et le problème de disparition trop rapide de l'actif du fait de sa volatilité ou de son lessivage par les eaux.

En outre, la difficulté souvent rencontrée par l'homme du métier pour réaliser ces revêtements de graine consiste en l'obtention de graines présentant une coulabilité acceptable pour la manipulation dans les semoirs. La solution apportée dans la présente invention conduit à des graines enrobées facilement écoulables dans les semoirs.

Ainsi, la présente invention concerne une composition, en particulier une composition agrochimique, comprenant des particules en suspension dans une phase aqueuse, dans laquelle : lesdites particules comprennent une enveloppe solide entourant un cœur, dans lesquelles :
- l'enveloppe solide comprend au moins un copolymère de type HASE, et
- le cœur représente au moins 90% en poids, notamment de 90 à 99,5% en poids, du poids total des particules et comprend un mélange de cire, d'huile et d'un composé sémiochimique,
la phase aqueuse comprend au moins un copolymère de type ASE et une base choisie parmi l'hydroxyde d'ammonium, l'hydroxyde de sodium, l'hydroxyde de potassium et leurs combinaisons, de sorte à ce que la phase aqueuse présente un pH compris entre 7 et 9,5, de préférence entre 7 et 8.

La composition selon l'invention est destinée plus particulièrement à traiter des graines par enrobage.

La présente invention concerne également un kit comprenant :
- une première composition, en particulier de type agrochimique, comprenant des particules en suspension dans une phase aqueuse, dans laquelle :
   lesdites particules comprennent une enveloppe solide entourant un cœur, dans lesquelles :
   - l'enveloppe solide comprend au moins un copolymère de type HASE, et
   - le cœur représente au moins 90% en poids, notamment de 90 à 99,5% en poids, du poids total des particules et comprend un mélange de cire, d'huile et d'un composé sémiochimique, et
- une deuxième composition comprenant dans une phase aqueuse au moins un copolymère de type ASE et une base choisie parmi l'hydroxyde d'ammonium, l'hydroxyde de sodium, l'hydroxyde de potassium et leurs combinaisons, de sorte à ce que la phase aqueuse présente un pH compris entre 7 et 9,5, de préférence entre 7 et 8.

Le kit selon l'invention permet plus particulièrement de traiter des graines en appliquant d'abord la deuxième composition pour enrober la graine avec un film de copolymère ASE, puis en appliquant la première composition, par exemple en une ou plusieurs fois, pour faire adhérer les particules de composé sémiochimique sur le copolymère de type ASE qui enrobe la graine.

La composition et le kit selon l'invention permettent ainsi de former un enrobage autour de la graine, cet enrobage comprenant des capsules/particules emprisonnant l'agent actif, à savoir le composé sémiochimique. Le polymère d'enrobage permet de créer une couche protectrice autour de la graine pour éviter que le composé sémiochimique, une fois libéré des particules, entre en contact avec la graine. Lorsque les particules sont incluses dans le polymère d'enrobage, il permet également, de par sa nature hydrosoluble, de libérer progressivement les particules d'agent actif dans le sol à proximité de la graine. En outre, du fait de son caractère solide et hydrophobe, l'enveloppe des particules d'agent actif (à base de copolymère de type HASE) protège à la fois la graine des effets phytotoxiques de l'agent actif (puisque la graine reste isolée du composé sémiochimique) et l'agent actif lui-même de l'environnement extérieur et notamment de l'eau. L'enveloppe permet ainsi un relargage contrôlé de l'agent actif contenu dans les particules. L'agent actif se trouve libéré progressivement dans le temps, permettant de protéger la graine pendant la phase de germination et de levée de la plante.

La présente invention a également pour objet un procédé de préparation d'une composition selon l'invention, comprenant les étapes suivantes :
(i) préparation d'une suspension aqueuse des particules ;
(ii) ajout de l'au moins un copolymère de type ASE ; et
(iii) ajout de la base de sorte à obtenir un pH compris entre 7 et 9,5, de préférence entre 7 et 8.

La présente invention concerne également un procédé de traitement d'une graine comprenant :
- l'application d'une composition selon l'invention sur une graine, et plus particulièrement l'enrobage d'une graine avec une composition selon l'invention, ou
- l'application de la deuxième composition du kit selon l'invention sur une graine, plus particulièrement par enrobage ; puis l'application, en une ou plusieurs fois, de la première composition du kit selon l'invention sur la graine préalablement revêtue, en particulier enrobée, de la deuxième composition du kit selon l'invention.

La présente invention concerne donc également une graine traitée, notamment enrobée, avec une composition selon l'invention ou à l'aide du kit selon l'invention, notamment susceptible d'être obtenue par le procédé de traitement susmentionné.

La présente invention concerne également l'utilisation d'une composition ou d'un kit selon l'invention pour protéger une graine, plus particulièrement destinée à être semée, et/ou un semis émergent contre un insecte ou nématode ravageur.

### DESCRIPTION DETAILLEEE DE L'INVENTION

### Définitions

Par « insecte ou nématode ravageur », on entend, au sens de la présente invention, un insecte (y compris une larve d'insecte) ou un nématode considéré comme nuisible pour une culture agricole. Il s'agira plus particulièrement ici d'un ravageur qui attaque les parties sous terraines de la plante (graine, germe, système racinaire). Dans la suite du texte, les nématodes et insectes ravageurs seront désignés par l'appellation commune « ravageurs » ou « ravageurs du sol ». Par « composé sémiochimique », on entend, au sens de la présente invention, une substance détectée par un ravageur tel que défini ci-dessus et éloignant sans effet léthal ledit ravageur de la graine ou de la plantule à protéger. Le composé sémiochimique est généralement volatil mais peut aussi diffuser dans le sol du fait de sa solubilité dans l'eau. De manière préférentielle, les composés sémiochimiques sont des composés de type terpénique, notamment d'origine naturelle. Les composés sémiochimiques peuvent être également des aldéhydes, des esters ou des dérivés jasmoniques.

Par « cire », on entend, au sens de la présente invention, un composé lipophile et solide à température ambiante (environ 25°C) et pression atmosphérique (1013,25 hPa), de préférence d'origine naturelle.

Par « huile », on entend, au sens de la présente invention, un composé gras, liquide à température ambiante (environ 25°C) et pression atmosphérique (1013,25 hPa), non miscible à l'eau et non volatil.

Par « copolymère de type ASE » (ASE étant l'abréviation de « Alkali Swellable Emulsion », à savoir émulsion pouvant gonfler en milieu alcalin), on entend, au sens de la présente invention, un copolymère d'acide (méth)acrylique et d'acrylate d'alkyle, notamment un copolymère d'acide méthacrylique et d'acrylate d'éthyle, obtenu par polymérisation radicalaire en émulsion. Un tel polymère a la propriété, lors de sa neutralisation par une base telle que l'hydroxyde de sodium, de potassium ou d'ammonium, de devenir hydrosoluble.

Par « copolymère de type HASE » (HASE étant l'abréviation de « Hydrophobically modified Alkali Swellable Emulsion », à savoir émulsion pouvant gonfler en milieu alcalin modifiée de manière hydrophobe), on entend, au sens de la présente invention, un copolymère de type ASE, tel que défini ci-dessus, obtenu à partir du même mélange de monomères et comprenant en outre un macromonomère hydrophobe de formule Chem. I suivante : 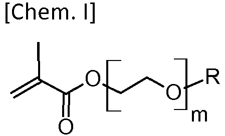 dans laquelle :
- m est un entier compris entre 1 et 40, de préférence compris entre 10 et 30, et
- R un groupement hydrocarboné de formule CₙH₂ₙ₊₁ dans lequel n est un entier compris entre 9 et 25, de préférence entre 10 et 22 et encore préférentiellement égal à 12.

Le groupe R est donc hydrophobe.

Par « semis émergent », on entend, au sens de la présente invention, un semis durant sa phase d'émergence allant du stade de la graine germée au stade de la plantule. La période d'émergence peut être plus ou moins longue selon les plantes et dure jusqu'à ce que la plante soit assez robuste pour se défendre elle-même contre les ravageurs du sol.

### Composition et Kit

La composition selon l'invention, en particulier une composition agrochimique, et le kit selon l'invention, en particulier de type agrochimique, comprennent ainsi des particules en suspension dans une phase aqueuse.

Les particules comprennent une enveloppe solide entourant un cœur. Les particules, en suspension dans une phase aqueuse, représentent avantageusement de 1% à 70%, notamment de 1% à 50%, en particulier de 1% à 20%, en poids du poids total de la composition.

L'enveloppe solide comprend, notamment est constitué de, au moins un copolymère de type HASE.

Avantageusement, le copolymère de type HASE comprend, notamment est constitué de, par rapport au poids total du copolymère :
- entre 30% et 40% en poids d'unités de répétition issues d'acide méthacrylique,
- entre 45% et 60% en poids d'unités de répétition issues d'acrylate d'éthyle, et
- entre 5% et 20% en poids d'unités de répétition issues d'un macromonomère de formule Chem. I suivante : 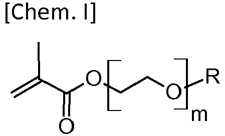 dans laquelle :
   · m est un entier compris entre 1 et 40, de préférence compris entre 20 et 40, et
   · R un groupement hydrocarboné de formule CₙH₂ₙ₊₁ dans lequel n est un entier compris entre 9 et 25, de préférence entre 10 et 20 et encore préférentiellement égal à 12.

Le copolymère de type HASE peut être préparé, par exemple, selon l'une des méthodes décrites dans WO2011/104599, WO2011/104600 et EP1778797. Il peut s'agir du Pharma 38 de la société Coatex.

Le cœur représente au moins 90% en poids, notamment de 90% à 99,5% en poids, du poids total des particules et comprend un mélange de cire, d'huile et d'un composé sémiochimique.

Les cires susceptibles d'être utilisées dans une composition selon l'invention peuvent être choisies parmi les cires d'origine animale, les cires d'origine végétale, les cires minérales, les cires de synthèse et leurs mélanges. A titre de cire d'origine animale, on peut citer la cire d'abeille, la cire de lanoline, ou encore la cire d'insectes de Chine. A titre de cire d'origine végétale, on peut citer la cire de riz, la cire de carnauba, la cire de candelilla, la cire de jojoba, la cire d'ouricurry, la cire d'alfa, la cire de fibres de liège, la cire de canne à sucre, la cire du Japon, ou encore la cire de sumac. A titre de cire minérale, on peut citer la cire de montan, les cires microcristallines, les paraffines, ou encore l'ozokérite. A titre de cire de synthèse, on peut citer les cires de polyéthylène, les cires obtenues par la synthèse de Fisher-Tropsch, ou encore des copolymères cireux et leurs esters. On peut aussi citer les cires obtenues par hydrogénation catalytique d'huiles d'origine animale ou végétale ayant des chaînes grasses insaturées, linéaires ou ramifiées, en C8-C32. Parmi celles-ci, on peut notamment citer l'huile de jojoba hydrogénée, l'huile de tournesol hydrogénée, l'huile de ricin hydrogénée, l'huile de coprah hydrogénée, ou encore l'huile de lanoline hydrogénée, ainsi que le tétrastéarate de di-(triméthylol-1,1,1-propane). On peut également utiliser des cires obtenues par transesterification et hydrogénation d'huiles d'origine végétale, telles que l'huile de ricin ou d'olive, comme les cires vendues sous les dénominations de Phytowax ricin 16L64^{®}, Phytowax ricin 22L73^{®} et Phytowax Olive 18L57^{®} par la société SOPHIM.

Avantageusement, la cire est choisie dans le groupe constitué par la cire d'abeille, la cire de lanoline, la cire d'insectes de Chine, la cire de riz, la cire de carnauba, la cire de candelilla, la cire de jojoba, la cire d'ouricurry, la cire d'alfa, la cire de fibres de liège, la cire de canne à sucre, la cire du Japon, la cire de sumac, la cire de montan, les cires microcristallines, et leurs mélanges. L'huile selon l'invention pourra être choisie parmi les huiles d'origine végétale. De manière particulière, l'huile selon l'invention sera choisie dans le groupe constitué par l'huile de tournesol, l'huile d'arachide, l'huile de soja, l'huile de colza, l'huile de maïs, l'huile d'olive, l'huile de raisin, l'huile de noix, l'huile de lin, l'huile de palme, l'huile de coco, l'huile d'argan, l'huile d'avocat, l'huile d'amande, l'huile de noisette, l'huile de pistache, l'huile de riz, l'huile de coton, l'huile de germes de blé, l'huile de sésame, et leurs mélanges.

Le composé sémiochimique pourra être choisi parmi les dérivés terpéniques, les aldéhydes, les esters tels que les acétates, les dérivés jasmoniques, et les mélanges de ceux-ci, ces molécules étant de préférence naturellement émises par des plantes. De préférence, le composé sémiochimique sera choisi parmi les dérivés terpéniques, les aldéhydes, les esters tels que les acétates, et les mélanges de ceux-ci, ces molécules étant de préférence naturellement émises par des plantes.

A titre d'exemple, le dérivé terpénique, de préférence naturellement émis par des plantes, peut être le thymol, le géraniol, les pinènes (alpha ou béta), le limonène, le camphre, le camphène, la sabinène, le menthol, l'eucalyptol, le β-caryophyllène, les β-ocimènes, le citronellol, le linalool et son acétate, l'acétate de lavandulyle, les terpinéols, les terpinènes, ou un mélange de ceux-ci ; en particulier peut être le thymol, le géraniol, les pinènes (alpha ou béta), le limonène, le camphre, le menthol, l'eucalyptol, le β-caryophyllène, les β-ocimènes, le linalool et son acétate, l'acétate de lavandulyle, les terpinéols, les terpinènes, ou un mélange de ceux-ci.

L'aldéhyde, de préférence naturellement émis par des plantes, sera plus particulièrement un aldéhyde ayant de 5 à 18 (e.g. 6 à 16) atomes de carbone et comprenant une chaine hydrocarbonée saturée ou insaturée (e.g. comprenant une ou plusieurs, notamment 1 ou 2 doubles liaisons C=C), de préférence linéaire, tel que le Z-11-hexadécénal, le Z-9-tétradécénal, le n-hexanal, le 3-hexénal, l'octanal, ou un mélange de ceux-ci.

L'ester, de préférence naturellement émis par des plantes, sera de préférence un acétate, en particulier un acétate ayant de 5 à 18 (e.g. 6 à 10 ou 6 à 8) atomes de carbone et comprenant une chaine hydrocarbonée saturée ou insaturée (e.g. comprenant une ou plusieurs, notamment 1 ou 2 doubles liaisons C=C), de préférence linéaire, peut être l'acétate de 2-hexényle, l'acétate d'octényle, l'acétate d'hexadiényle, ou un mélange de ceux-ci.

Le dérivé jasmonique, de préférence naturellement émis par des plantes, peut être la jasmone, le jasmonate de méthyle, ou un mélange de ceux-ci.

Avantageusement, le cœur des particules comprend, notamment est constitué de, par rapport au poids total du cœur :
- de 25% à 90%, particulièrement de 60% à 80%, en poids d'huile,
- de 8% à 50%, particulièrement de 8% à 35%, en poids de cire, et
- de 0,1% à 25%, particulièrement de 0,5% à 20%, en poids de composé sémiochimique.

L'ajustement des ratios cire/huile/composé sémiochimique dépendra cependant de la solubilité du composé sémiochimique dans le mélange cire/huile.

Les particules de la présente invention se présentent sous la forme de structures plus ou moins sphériques.

Les particules ont plus particulièrement une taille moyenne variant de 0,2 µm à quelques dizaines de micromètres, tels que de 0,2µm à 30µm, par exemple de 0,5µm à 20 µm, en particulier de 1µm à 10 µm. Lorsque les particules sont des particules sphériques, la taille moyenne des particules désigne le diamètre moyen des particules. Lorsque les particules ne sont pas sphériques, c'est-à-dire qu'elles présentent une dimension plus longue et une dimension plus courte, la taille moyenne des particules désigne la moyenne de la dimension plus longue des particules. La taille des particules peut être mesurée selon des méthodes bien connues de l'homme du métier, telles que par granulométrie laser.

La phase aqueuse de la composition selon l'invention ou de la deuxième composition du kit selon l'invention comprend au moins un copolymère de type ASE et une base choisie parmi l'hydroxyde de potassium, l'hydroxyde de sodium, l'hydroxyde d'ammonium et leurs combinaisons, de sorte à ce que la phase aqueuse présente un pH compris entre 7 et 9,5, notamment entre 7 et 8. Avantageusement, le copolymère de type ASE est caractérisé en ce qu'il comprend, notamment est constitué de, par rapport au poids total du copolymère, entre 20% et 60% en poids d'unités de répétition issues d'acide métacrylique et entre 40% et 80% en poids d'unités de répétition issues d'acrylate d'éthyle. Les méthodes de fabrication de tels polymères sont bien connues de l'homme du métier (voir par exemple Alkali-Swellable and Alkali Soluble Thickener Technology A Review part Gregory D. Shay DOI : 10.1021/ba-1989-0223.ch025 Date de Publication : 5 mai 1989 dans Polymers in Aqueous Media Chapitre 25, pages 457-494) et il est possible de les trouver sous les marques commerciales suivantes : Rheocoat^{™}, viscoatex^{™} de Coatex, Ies Rheovis^{™} de BASF, les Acrysol^{™} de DOW, les rheolate^{™} d'Elementis. En particulier, il peut s'agir du Rheocoat 35 de la société Coatex, des Rheovis AS1130 ou AS 1125 de BASF, ou encore de l'acrysol TT-615 de Dow.

La base sera choisie parmi l'hydroxyde d'ammonium, l'hydroxyde de sodium, l'hydroxyde de potassium et leurs combinaisons ; avantageusement choisie parmi l'hydroxyde d'ammonium, l'hydroxyde de sodium et leurs combinaisons ; et de préférence sera l'hydroxyde d'ammonium. La base ajoutée à la phase aqueuse de sorte obtenir un pH compris entre 7 et 9,5 permet de neutraliser le copolymère de type ASE. Les fonctions acide carboxylique (COOH) présentes sur le copolymère de type ASE se trouvent alors sous la forme de carboxylates (COO⁻) dont le contre-ion dépendra de la nature de la base ajoutée et pourra donc être Na⁺, K⁺ ou NH₄⁺. Cette neutralisation permet de rendre le copolymère de type ASE filmogène.

La phase aqueuse de la première composition du kit selon l'invention aura avantageusement un pH compris entre 7 et 9,5, notamment entre 7 et 8.

### Procédé de préparation de la composition ou du kit

La composition selon l'invention peut être préparée selon les étapes suivantes :
(i) préparation d'une suspension aqueuse des particules ;
(ii) ajout de l'au moins un copolymère de type ASE ; et
(iii) ajout de la base de sorte à obtenir un pH compris entre 7 et 9,5, de préférence entre 7 et 8.

Dans le cadre d'un kit selon l'invention, la première composition pourra être préparée selon l'étape (i) ci-dessus, et la deuxième composition pourra être préparée selon les étapes (ii) et (iii) ci-dessus, l'étape (ii) étant alors réalisée sur une phase aqueuse dépourvue de particules selon l'invention. Le pH des phases aqueuses des première et deuxième compositions du kit selon l'invention sera ajusté, si besoin, en fin de procédé, selon la valeur désirée, notamment telle qu'indiquée ci-dessus.

### Etape (i) :

La suspension aqueuse des particules est avantageusement préparée selon les étapes suivantes :
(a) préparation d'une phase grasse comprenant la cire, l'huile et le composé sémiochimique,
(b) chauffage de la phase grasse à une température supérieure au point de fusion de la cire,
(c) préparation d'une solution aqueuse comprenant le copolymère de type HASE, ladite solution aqueuse ayant un pH compris entre 8 et 10,
(d) chauffage de la solution aqueuse comprenant le copolymère de type HASE à une température substantiellement identique à celle de la phase grasse,
(e) ajout de la phase grasse à la solution aqueuse comprenant le copolymère de type HASE et agitation de sorte à former une dispersion de gouttelettes de phase grasse dans la solution aqueuse (qui constitue une phase aqueuse continue), et
(f) acidification à un pH compris entre 6 et 7,5, de préférence entre 6,5 et 7, afin de former les particules.

La phase grasse sera préparée à l'étape (a) de sorte à obtenir un mélange de cire, d'huile et d'un composé sémiochimique ayant la composition du cœur décrit ci-avant.

Dans un mode de réalisation particulier, la phase grasse est chauffée à l'étape (b) à une température comprise entre 50°C et 80°C, notamment entre 60°C et 80°C, cette température devant être supérieure à la température de fusion de la cire.

La solution aqueuse de l'étape (c) pourra être préparée en basifiant une solution aqueuse comprenant le copolymère de type HASE par ajout d'une base, identique ou différente à la base utilisée à l'étape (iii), de sorte à obtenir un pH compris entre 8 et 10. Cette base sera avantageusement choisie parmi le carbonate de sodium ou de potassium, l'hydroxyde d'ammonium ou l'ammoniac en solution aqueuse, l'hydroxyde de sodium, l'hydroxyde de potassium et leurs combinaisons.

A l'étape (d), par « température substantiellement identique », on entend avantageusement une température ne variant pas de plus de 10°C, notamment de plus de 5°C, par rapport à la température de chauffage de l'étape (b). De préférence, la température de l'étape (d) sera identique à celle de l'étape (b).

Les gouttelettes de phase grasse formées à l'étape (e) formeront le cœur des particules, une fois ramenées à température ambiante.

L'acidification de l'étape (f) permet de faire précipiter le copolymère de type HASE présent dans la solution aqueuse sur les gouttelettes qui deviennent alors des particules comprenant le cœur à base de cire, d'huile et du composé sémiochimique entouré de l'enveloppe solide à base du copolymère de type HASE. Ces particules sont dispersées dans l'eau et forment ainsi une suspension aqueuse des particules.

Dans un mode de réalisation particulier, l'acidification de l'étape (f) est réalisée par ajout d'un acide tel que l'acide chlorhydrique, l'acide phosphorique, l'acide sulfurique, un acide organique de type acide carboxylique (particulièrement l'acide acétique ou l'acide propionique) ou un mélange de ceux-ci, notamment de l'acide phosphorique, jusqu'à atteindre un pH compris entre 6 et 7,5, de préférence entre 6,5 et 7. Cet acide est de préférence ajouté sous forme d'une solution aqueuse.

Dans un autre mode de réalisation, l'étape (f) et l'étape (ii) sont concomitantes, le copolymère de type ASE permettant d'acidifier la solution aqueuse.

La suspension aqueuse peut être préparée notamment comme décrit dans WO 2016/131883.

La température de la suspension aqueuse des particules obtenue à l'étape (f) est avantageusement amenée à une température inférieure au point de fusion de la cire, notamment à une température comprise entre 20°C et 30°C, notamment avant de mettre en œuvre l'étape (ii) (si celle-ci n'est pas concomitante avec l'étape (f)) et/ou l'étape (iii).

### Etapes (ii) et (iii) :

L'ajout du copolymère de type ASE et sa neutralisation par l'ajout de la base permet de rendre la suspension aqueuse filmifiante et de pouvoir l'utiliser comme enrobage.

La base de l'étape (iii) sera avantageusement choisie parmi l'hydroxyde d'ammonium, l'hydroxyde de sodium, l'hydroxyde de potassium et leurs combinaisons L'étape (iii) sera plus particulièrement réalisée postérieurement ou simultanément à l'étape (ii), de préférence postérieurement à l'étape (ii).

L'étape (iii), et éventuellement l'étape (ii), lorsqu'elle n'est pas concomitante à l'étape (f), est avantageusement réalisée à une température inférieure au point de fusion de la cire, notamment à une température comprise entre 20°C et 30°C.

### Procédé de traitement/d'enrobage d'une graine et graine traitée/enrobée

La présente invention concerne également un procédé de traitement d'une graine, ce procédé comprenant :
(a) l'application d'une composition selon l'invention sur une graine, plus particulièrement l'enrobage d'une graine avec une composition selon l'invention, ou
(b) l'application de la deuxième composition du kit selon l'invention sur une graine, plus particulièrement par enrobage ; puis l'application, en une ou plusieurs fois, de la première composition du kit selon l'invention sur la graine préalablement revêtue, en particulier enrobée, de la deuxième composition du kit selon l'invention.

### Procédé (a) :

Le procédé de traitement ou d'enrobage de la graine permet de former un film solide autour de la graine à partir d'une composition selon l'invention.

Ce procédé comprend avantageusement :
(1) la mise en contact d'une composition selon l'invention avec la graine de sorte à former une pellicule de composition autour de la graine, et
(2) le séchage de la graine obtenue à l'étape (1).

L'étape (1) pourra être réalisée en plaçant la graine, et plus particulièrement les graines car plusieurs graines sont généralement traitées en même temps, dans un mélangeur tournant de milieux granulaires (par exemple de type bétonnière), puis en ajoutant la composition selon l'invention de sorte à la répartir de manière homogène sur la graine / autour des graines. L'étape (2) permet d'évaporer l'eau présente dans la composition selon l'invention de sorte à former une couche solide autour de la graine, par un phénomène de filmification.

Ce procédé, notamment les étapes (1) et (2) ci-dessus, peut être répété plusieurs fois avec la même composition selon l'invention, avec des compositions selon l'invention différentes (comprenant en particulier des composé sémiochimiques différents) et/ou avec d'autres compositions telles que des compositions agrochimiques d'enrobage comprenant d'autres types d'agents actifs ou ne comprenant pas d'agent actif. Ainsi, la graine peut en outre être traitée, notamment enrobée, avec une autre composition qu'une composition selon l'invention.

Il peut en effet être envisagé :
- de former un enrobage dépourvu de tout agent actif (enrobage dit neutre) préalablement à la formation de l'enrobage selon l'invention, de sorte à protéger davantage la graine de l'effet phytotoxique du composé sémiochimique ;
- de former un enrobage dépourvu de tout agent actif postérieurement à la formation de l'enrobage selon l'invention, de sorte à protéger davantage l'enrobage selon l'invention du milieu extérieur ;
- de former plusieurs couches d'enrobage selon l'invention avec un même composé sémiochimique, de sorte à adapter la quantité déposée de ce composé, et/ou avec des composés sémiochimiques différents, de sorte à protéger la graine contre différents ravageurs ;
- de former un ou plusieurs enrobages avec des compositions agrochimiques d'enrobage comprenant d'autres types d'agents actifs (e.g. fongicide, stimulateur de croissance, engrais, etc.), de sorte à apporter d'autres bienfaits à la plante.

### Procédé (b) :

Le procédé de traitement ou d'enrobage de la graine permet de former un film solide autour de la graine à partir de la deuxième composition du kit selon l'invention sur lequel des particules de composé sémiochimique vont adhérer.

Ce procédé comprend avantageusement :
(1') la mise en contact de la deuxième composition du kit selon l'invention avec la graine de sorte à former une pellicule de la deuxième composition autour de la graine et obtenir une graine pelliculée,
(2') la mise en contact de la graine pelliculée obtenue à l'étape (1') avec la première composition du kit selon l'invention, de sorte à appliquer des particules de composé sémiochimique sur la graine pelliculée, et
(3') le séchage de la graine obtenue à l'étape (2').

L'étape (1') pourra être réalisée en plaçant la graine, et plus particulièrement les graines car plusieurs graines sont généralement traitées en même temps, dans un mélangeur tournant de milieux granulaires (par exemple de type bétonnière), puis en ajoutant la deuxième composition du kit selon l'invention de sorte à la répartir de manière homogène sur la graine / autour des graines.

L'étape (2') pourra être réalisée par pulvérisation de la première composition sur les graines pelliculées obtenues à l'étape (1') précédente. L'application de la première composition pourra être réalisée dans le même mélangeur tournant de milieux granulaires de sorte à pouvoir bien homogénéiser la répartition de la première composition sur les graines pelliculées.

L'étape (3') permet d'évaporer l'eau présente dans les première et deuxième compositions du kit selon l'invention de sorte à former une couche solide autour de la graine, par un phénomène de filmification.

Ce procédé, notamment les étapes (1'), (2') et (3') ci-dessus, peut être répété plusieurs fois avec les mêmes première et deuxième compositions du kit selon l'invention, avec des première et deuxième compositions selon l'invention différentes (comprenant en particulier des composé sémiochimiques différents) et/ou avec d'autres compositions telles que des compositions agrochimiques d'enrobage comprenant d'autres types d'agents actifs ou ne comprenant pas d'agent actif. Ainsi, la graine peut en outre être traitée, notamment enrobée, avec une autre composition qu'une composition selon l'invention ou issue d'un kit selon l'invention.

Il peut en effet être envisagé :
- de former un enrobage dépourvu de tout agent actif (enrobage dit neutre) préalablement à la formation de l'enrobage selon l'invention, de sorte à protéger davantage la graine de l'effet phytotoxique du composé sémiochimique ;
- de former un enrobage dépourvu de tout agent actif postérieurement à la formation de l'enrobage selon l'invention, de sorte à protéger davantage l'enrobage selon l'invention du milieu extérieur ;
- de former plusieurs couches d'enrobage selon l'invention avec un même composé sémiochimique, de sorte à adapter la quantité déposée de ce composé, et/ou avec des composés sémiochimiques différents, de sorte à protéger la graine contre différents ravageurs ;
- de former un ou plusieurs enrobages avec des compositions agrochimiques d'enrobage comprenant d'autres types d'agents actifs (e.g. fongicide, stimulateur de croissance, engrais, etc.), de sorte à apporter d'autres bienfaits à la plante.

La présente invention concerne également une graine traitée, notamment enrobée, avec une composition selon l'invention ou à l'aide d'un kit selon l'invention. Comme indiqué ci-dessus, elle peut également être traitée plusieurs fois avec la même composition selon l'invention / à l'aide du même kit selon l'invention ou avec des compositions selon l'invention différentes / à l'aide de kits selon l'invention différents.

La graine peut en outre être traitée, notamment enrobée, avec une autre composition que celle selon la présente invention ou selon un kit selon l'invention, en particulier préalablement et/ou postérieurement au traitement, notamment à l'enrobage, avec une composition selon l'invention ou à l'aide d'un kit selon l'invention. Cela permet de former plusieurs couches autour de la graine, au moins l'une de ses couches ayant été obtenue à partir d'une composition selon l'invention ou à l'aide d'un kit selon l'invention. Ces couches pourront contenir des ingrédients actifs différents de sorte à conférer différents bienfaits à la plante que ce soit en termes de protection contres des organismes nuisibles ou indésirables ou encore de stimulation de la croissance de la plante.

Plus particulièrement, une telle graine traitée, notamment enrobée, est susceptible d'être obtenue par le procédé de traitement, notamment d'enrobage, détaillé ci-dessus. Ces graines résisteront mieux aux attaques de ravageurs.

La graine pourra être plus particulièrement choisie parmi des graines de céréales telles que le maïs, le blé, l'orge, le sorgho ; des graines de plantes protéo-oléagineuses telles que le colza, le tournesol, le soja ; et des graines de plantes maraîchères telles que les carottes, les radis, les navets, les salades, les haricots, les melons, les aubergines, les courges, les courgettes, les aulx, les oignons, les poireaux.

### Utilisation de la composition ou du kit pour la protection d'une graine et/ou d'un semis émergent

La présente invention concerne également l'utilisation d'une composition selon l'invention ou d'un kit selon l'invention pour protéger, plus particulièrement dans le sol, une graine, plus particulièrement destinée à être semée, et/ou un semis émergent contre un ravageur.

La présente invention concerne également une méthode de protection dans le sol d'une graine et/ou d'un semis émergent contre un ravageur, comprenant les étapes suivantes :
- appliquer sur la graine une quantité efficace d'une composition selon l'invention ou des première et deuxième compositions du kit selon l'invention, notamment par le procédé de traitement d'une graine selon l'invention, de sorte à obtenir une graine traitée, notamment enrobée, puis
- semer la graine traitée, notamment enrobée, dans le sol.

La composition ou le kit selon l'invention permettent en effet de conférer une protection lors la phase de germination de la graine et de levée de la plante, c'est-à-dire sa sortie de terre.

La graine ou le semis émergent à protéger sera plus particulièrement une graine ou un semis émergent d'une plante, avantageusement choisie parmi les céréales telles que le maïs, le blé, l'orge, le sorgho ; les plantes protéo-oléagineuses telles que le colza, le tournesol, le soja ; et les plantes maraîchères telles que les carottes, les radis, les navets, les salades, les haricots, les melons, les aubergines, les courges, les courgettes, les aulx, les oignons, les poireaux.

Le ravageur est un ravageur présent dans le sol, à savoir dans l'environnement de croissance de la graine. Il s'agira plus particulièrement du ver taupin (ou ver fil de fer), de larves de hannetons, de larves d'otiorhynques, de larves de tipules, de larves d'hépiale, des *Ditylenchus dipsaci,* de nématodes vecteurs de virus tels que les Trichodorus ou les Longidoridae, de nématodes générateurs de kystes ou de galles sur les racines tels que les Meloidogynes ou les Globodera, ou encore de nématodes qui assèchent les racines tels que les nématodes du genre Pratylenchus. En particulier les *Ditylenchus dipsaci* sont particulièrement nuisibles pour les carottes, les oignons, les poireaux et les navets.

Un avantage de l'invention consiste en la simplicité de préparation et d'utilisation des suspensions de capsules de sémiochimique ce qui facilite les extrapolations industrielles tant pour la fabrication des suspensions que pour la fabrication des graines enrobées.

### EXEMPLES

### Exemple 1 (avec une composition selon l'invention)

### Matières premières :

Le Tableau 1 ci-dessous recense les matières premières utilisées dans les exemples.

**[Tableau 1]**

| Matières premières | Fournisseur |
|---|---|
| Eau déminéralisée | Ciron |
| Solution de soude à 10%p/p dans l'eau | M2i |
| Solution de potasse 16,6% p/p dans l'eau | M2i |
| Solution d'hydroxyde d'ammonium 9,88 p/p dans l'eau | M2i |
| Pharma 38 | Coatex |
| Huile de Tournesol | IES |
| Cire d'abeille | Prayon |
| Thymol (CAS 89-83-8) | Aldrich |
| Rheocoat 35 | Coatex |
| Graines de maïs | Ferrarix |

### Méthodes :

### Mesure de viscosité Brookfield

Les mesures de viscosité sont réalisées sur un viscosimètre Brookfield DV1 avec le mobile SC04 25. La vitesse de rotation du mobile est indiquée en tour par minute (RPM) pour chaque mesure. Les viscosités sont mesurées à 25°C.

### Mesure de granulométrie

Les mesures de taille de particules sont réalisées avec un granulomètre Malvern Mastersizer MS3000. L'échantillon à analyser est dilué dans de l'eau distillée à la concentration de 0,5g pour 100mL. On utilise le modèle de la diffusion de Mie pour calculer les tailles de particules avec 1,5 comme valeur pour l'indice de réfraction des particules et 0,005 pour leur coefficient d'absorption. Les valeurs rapportées dans les tableaux sont les valeurs au pic.

Plusieurs tests sont pratiqués sur les graines enrobées afin de vérifier que l'enrobage est satisfaisant.

### Test d'écoulement

Le convoyage des graines est simulé dans les tubes d'un semoir. Le montage consiste en un entonnoir muni d'un tuyau de 1 mètre de long et 2,7cm de diamètre intérieur. Le test est réussi si l'ensemble des graines chargées dans l'entonnoir s'écoule sans créer d'obstruction.

### Test de tamisage

Une centaine de graines sont tamisées avec un tamis ne laissant passer que les graines individuelles. Le test est réussi si l'ensemble des graines passent au travers. Le test n'est pas réussi si des graines sont agglomérées ou collantes et ne passent pas au travers du tamis.

### Test de dissolution de la couche d'enrobage

Un test de dissolution est pratiqué afin de s'assurer de la perméabilité de l'enrobage à l'eau. Quelques graines sont mises dans un tube à essai rempli d'eau pendant 16h. Les graines doivent ressortir entièrement lavées de l'enrobage.

### Test de germination

Afin de vérifier si l'enrobage a un éventuel effet phytotoxique sur la graine, des tests de germination des graines enrobées sont réalisés puisqu'un effet phytotoxique empêcherait cette germination. Ces tests peuvent être conduits de deux manières :
(1) soit par semis dans des jardinières contenant un mélange 50/50 de terre végétale et de terreau ;
(2) soit par germination artificielle dans une boite de pétri contenant du coton que l'on humidifie quotidiennement.

La méthode (1) a été utilisée dans les exemples ci-dessous.

La germination de la graine intervient au bout de quelques jours seulement. Si la germination de la graine n'est pas observée, on en conclut que la graine est morte.

### Protection des cultures

Des essais d'efficacité des enrobages sur la protection des cultures ont été menés sur maïs en micro-parcelles, chaque modalité étant répétée 4 fois. Pour chaque répétition, 4 rangs de 12m sont semés. Les observations sont faites sur les 2 rangs centraux et sur 10m (1m de bordure est laissé à chaque extrémité du rang). Ces essais ont été réalisés dans la région de Pau en France pendant la période s'étalant de mai à août 2021. Il est à noter que ces essais sont multifactoriels et ne sauraient être interprétés sans les tests de laboratoires précédemment décrits.

L'efficacité est évaluée via plusieurs notations :
A) Pourcentage de levée : détermination du pourcentage de plantes ayant levées, les plantes n'ayant pas levées étant considérées comme mortes car attaquées par le taupin ;
B) Pourcentage de plantes levées attaquées : détermination du pourcentage de plantes présentant des symptômes caractéristiques d'attaque de taupin (e.g. jaunissement des extrémités du feuillage avec une atteinte plus importante de la feuille centrale ; rougissement du limbe ; perforation au-dessus du plateau de tallage ; perforation ou lacération de la gaine de la tige ; dessèchement des plantes qui sont chétives ...) (cette notation est effectuée après la détermination du pourcentage de levée) ;
C) Pourcentage d'épis commercialisables : détermination de la taille moyenne d'un épi en prenant en considération toutes les modalités de l'essai, puis détermination du pourcentage d'épis ayant une taille supérieure à celui-ci pour chaque modalité ;
D) Rendement de production : mesure du rendement pour chaque modalité, les plantes ayant été protégées correctement auront un meilleur rendement.

### 1. Préparation de compositions d'enrobage

### 1.1. Préparation des compositions d'enrobage selon l'invention (compositions 1-4)

Dans un ballon en verre de 250 ml, sous agitation magnétique, sont mis à chauffer à T = 76°C jusqu'à fusion complète le composé sémiochimique, l'huile et la cire afin de former une phase huileuse. En parallèle, dans un second ballon tricol de 250mL, de l'eau et le copolymère de type HASE sont chauffés à T = 76°C sous agitation mécanique, puis une solution basique (SB1) est ajoutée et le milieu est homogénéisé pendant 15 min afin d'atteindre un pH > 9 (pH1) et de donner une phase aqueuse. La phase huileuse est ensuite introduite sur la phase aqueuse sous agitation (500-600 RPM) en 5-10 min. Le milieu est agité pendant 1h. Le copolymère de type ASE est ajouté au mélange et le pH est ajusté, si besoin, à un pH d'environ 7 (l'ajout du copolymère de type ASE et l'ajustement du pH par ajout d'une solution basique (SB2) peuvent se faire successivement ou simultanément, en une seule ou plusieurs étapes). Le pH (pH2) est mesuré après 15 min d'agitation.

Les compositions 1-4 selon l'invention ont été préparées à partir des matières premières selon le Tableau 2.

**[Tableau 2]**

| **Matières premières** | **Comp. 1** | **Comp. 2** | **Comp. 3** | **Comp. 4** |
|---|---|---|---|---|
| | (masses pesées en g) | | | |
| Eau déminéralisée | 41.41 | 64,19 | 59,19 | 54,21 |
| SB1/SB2 : solution aqueuse de B | 5.15 (B=NaOH 10%p/p) | 5,14 (B=NaOH 10%p/p) | 5,14 (B=KOH 16,6% p/p | 2,62 g (B=NH₄OH 9,88%p/p) |
| Copolymère de type HASE : Pharma 38 | 4.01 | 4,02 | 4,00 | 3,99 |
| Huile de tournesol | 25.16 | 3,22 | 3,22 | 3,22 |
| Cire d'abeille | 8.29 | 3,21 | 3,22 | 3,22 |
| Composé sémiochimique : Thymol | 10.00 | 15,01 | 15,01 | 14,99 |
| Copolymère de type ASE : Rheocoat 35 | 4.99 | 5,00 | 5,00 | 5,00 |
| QSP d'eau déminéralisée | 0.78 | - | 5,01 | 12,74 |
| **Masse récupérée** | 63,96 | 72,57 | 84,12 | 82,15 |

Les résultats des analyses effectuées pour les compositions 1-4 selon l'invention sont présentés dans le Tableau 3.

**[Tableau 3]**

| **Analyses** | **Comp. 1** | **Comp. 2** | **Comp. 3** | **Comp. 4** |
|---|---|---|---|---|
| pH1 | 9,80 | 9,80 | 10,51 | 9,12 |
| pH2 | 7,05 (63,5°C) | 7,16 (66,1°C) | 7,88 (73,6°C) | 7,69 |
| pH final | 7,13 (24,6°C) | 7,38 (19,0°C) | 7,23 (21,2°C) | 7,69 (20,7°C) |
| Viscosité (en mPa)* | 2 100 000 | 763 200 | 704 000 | 1 082 000 |
| Granulométrie | [2,5 ; 11,5] µm 1 pic à 3µm | [0,15 ; 10,0] µm 1 pic à 0,5 µm 1 pic à 2 µm | 1^{ère} population : | 1^{ère} population : |
| | | | [0,15 ; 12] µm | |
| | | | 1 pic à 0,5 µm | [0,1 ; 1,0] µm |
| | | | 1 pic à 3 µm | 1 pic à 0,5 µm |
| | | | 2^{ème} population : | 2^{ème} population : |
| | | | [12 ; 300] µm | [1,0 ; 9,0] µm |
| | | | 1 pic à 50 µm | 1 pic à 3 µm |

| | | | | |
|---|---|---|---|---|
| * vitesse du mobile : 0,3 RPM | | | | |

### 1.2. Préparation d'une composition sans composé sémiochimique (composition 5)

L'eau et le copolymère de type ASE sont agités dans un bécher. Une solution basique (SB) est additionnée en goutte à goutte rapide sous vive agitation mécanique (600 RPM).

Le pH final de la composition 5 est de 7,06 (20,4°C). Cette formulation a été préparée à partir des matières premières selon le Tableau 4.

**[Tableau 4]**

| **Matières premières** | **Comp. 5** |
|---|---|
| | (masses pesées en g) |
| Eau déminéralisée | 93,10 |
| SB : solution aqueuse de B | 4,06 (B=NaOH 10%p/p) |
| Copolymère de type ASE : Rheocoat 35 | 6,43 |

### 2. Préparation de graines enrobées

Les enrobages de graines sont réalisés avec un mélangeur à tambour de laboratoire, d'un volume de 1L. Les graines de maïs sont introduites dans le dispositif avec la composition d'enrobage. Le dispositif est agité à 50 rpm sous soufflage d'air à l'intérieur de la chambre pour faciliter l'évaporation de l'eau pendant 1 heure.

Lorsque plusieurs couches d'enrobage sont déposées successivement sur les graines, l'opération ci-dessus est répétée plusieurs fois avec différentes compositions d'enrobage.

Les caractéristiques des graines préparées sont décrites dans le Tableau 5 ci-dessous.

**[Tableau 5]**

| Enrobage | | A | B | C | D | E |
|---|---|---|---|---|---|---|
| Graines de maïs (g) | | 62,03 | 100,13 | 99,95 | 100,23 | 100,11 |
| **Enr. 0** | Comp. N° | - | 5 | 5 | 5 | 5 |
| | Quantité (g) | - | 2,61 | 2,60 | 2,57 | 2,66 |
| **Enr. 1** | Comp. N° | 2 | 2 | 3 | 4 | 2 |
| | Quantité (g) | 4,26 | 6,47 | 6,74 | 6,85 | 7,03 |
| **Enr. 2** | Comp. N° | - | - | - | - | 5 |
| | Quantité (g) | - | - | - | - | 2,65 |

### 3. Résultats obtenus

Les résultats applicatifs obtenus se déclinent selon 3 objectifs recherchés : la qualité des graines enrobées, la germination de la graine et l'effet sur la protection des cultures contre des attaques de ravageurs.

### 3.1. Qualité des graines enrobées

Les résultats obtenus avec les différents enrobages A à E pour les tests d'écoulement, de tamisage et de dissolution de la couche d'enrobage sont présentés dans le Tableau 6 ci-dessous.

**[Tableau 6]**

| Enrobage | A | B | C | D | E |
|---|---|---|---|---|---|
| Test d'écoulement | Succès | Succès | Echec | Succès | Succès |
| Test de tamisage | Succès | Succès | Echec | Succès | Succès |
| Test de dissolution | Succès | Succès | Succès | Succès | Succès |

Tous ces essais conduisent à des graines pouvant être semées car le revêtement des graines reste suffisamment hydrophile pour permettre le processus de germination. Nous notons par ailleurs que le choix de la nature de la base a une influence sur l'aspect des graines enrobées. L'exemple C a ainsi conduit à des graines moins facilement manipulables. Cela peut être dû à une rétention d'eau plus importante sur la surface des graines. Il est en effet connu que les ions potassium favorisent grandement d'adsorption d'eau.

### 3.2. Résultats au test de germination

Les résultats obtenus avec les différents enrobages A, B, D et E pour le test de germination sont présentés dans le Tableau 7 ci-dessous.

**[Tableau 7]**

| Enrobage | A | B | D | E |
|---|---|---|---|---|
| Test de germination | Succès | Succès | Succès | Succès |

Aucun des enrobages utilisés n'altère la germination des graines.

### 3.3. Résultats sur la protection des cultures

Les résultats obtenus avec les différents enrobages A, B, D et E sur la protection des cultures contre les attaques de ravageurs (en particulier le ver taupin très présent dans les terres choisies pour l'essai) selon les tests A) à D) sont présentés dans le Tableau 8 ci-dessous, ainsi que les résultats obtenus avec le témoin T, à savoir des graines non enrobées.

**[Tableau 8]**

| Enrobage | T | A | B | D | E |
|---|---|---|---|---|---|
| A) Pourcentage de levée | 53% | 67% | 77% | 86% | 60% |
| B) Pourcentage de plantes levées attaquées | 69% | 65% | 55% | 38% | 66% |
| C) Pourcentage d'épis commercialisables | 58% | 67% | 81% | 80% | 61% |
| D) Rendement de production | 64% | 69% | 84% | 84% | 71% |

Ces essais confirment les tendances observées dans les tests de laboratoire. Tous les semis selon l'invention ont eu un meilleur rendement et ont subi moins d'attaques que le témoin non traité.

### Exemple 2 (avec un kit selon l'invention)

Les composés sémiochimiques présentés dans le Tableau 9 ci-dessous ont été testés dans des formulations à 0,5 % en poids du poids de la première composition ou à 5 % en poids du poids de la première composition.

**[Tableau 9]**

| Code | Composé |
|---|---|
| A | Z-11-hexadécenal |
| B | Z-9-tétradécenal |
| C | Méthyl jasmonate |
| D | Jasmone |
| E | Mélange terpénique (5 % d'α-pinène, 5 % de β-pinène, 13 % de β-cayrophyllene, 13 % de limonène, 15 % de camphre, 12 % de camphène, 16 % de géraniol, 16 % de citronellol, 5 % de sabinène) |
| F | n-Hexanal |
| G | Acétate de 2-hexényl |
| H | Octanal/Acétate d'octényl |
| I | 3-hexenal/acétate d'hexdiényle |

### Préparation de la première composition du kit

### Formulations à 0,5 % de composé sémiochimique :

Dans un premier réacteur agité maintenu à 80 °C, on introduit 5 g du composé sémiochimique, 350 g d'huile de tournesol, 150 g de cire d'abeille de qualité cosmétique.

Dans un second réacteur, on introduit 450 mL d'eau chauffée à 80°C et maintenue sous agitation. Puis on ajoute 30 g de copolymère de type HASE (Pharma 38). Le pH de la solution est ensuite ajusté de 3 à 8,5 en ajoutant doucement une solution de soude à 5 %. La solution épaissit puis on ajoute goutte à goutte sous agitation le contenu du premier réacteur. À la fin de l'addition, on laisse homogénéiser le mélange pendant une heure, puis on ajuste le pH à 7,7 au moyen d'une solution à 1 % d'acide phosphorique. On obtient les formulations référencées COAT05A-I selon la nature du composé sémiochimique.

### Formulations à 5% de composé sémiochimique :

Dans un premier réacteur agité maintenu à 80 °C, on introduit 50 g du composé sémiochimique, 325 g d'huile de tournesol, 125 g de cire d'abeille de qualité cosmétique.

Dans un second réacteur, on introduit 450 mL d'eau chauffée à 80°C et maintenue sous agitation. Puis on ajoute 40 g de copolymère de type HASE (Pharma 38). Le pH de la solution est ensuite ajusté de 3 à 8,5 en ajoutant doucement une solution de soude à 5 %. La solution épaissit puis on ajoute goutte à goutte sous agitation le contenu du premier réacteur. À la fin de l'addition, on laisse homogénéiser le mélange pendant une heure, puis on ajuste le pH à 7,7 au moyen d'une solution à 1 % d'acide phosphorique. On obtient les formulations référencées COAT5A-I selon la nature du composé sémiochimique.

### Enrobage de graines de maïs

Les formulations COAT05A-I et COAT5A-1 sont utilisées dans le procédé d'enrobage décrit ci-dessous.

Dans un agitateur rotatif de 1 L, on introduit 100 g de graines de maïs. L'agitateur est maintenu en surface à une température de 40 °C au moyen d'un bain à huile chauffant.

On ajoute dans l'agitateur 14 g d'une solution aqueuse de copolymère de type ASE (Rheocoat 35) à 7 % neutralisée à un pH de 8 par une solution de potasse à 1 M.

Des flacons vaporisateurs de 5 mL sont ensuite préparés pour contenir 4 g des formulations COAT05A-I et COAT5A-I préparées précédemment. On vaporise ensuite dans l'agitateur 4 g de la formulation choisie en étalant la vaporisation sur 10 min de manière à bien laisser le temps à chaque vaporisation de sécher convenablement. On laisse l'agitateur tourner pendant 15 min après la fin de l'addition puis les graines sont retirées de l'agitateur et sont placées dans un sachet étanche en aluminium. On obtient ainsi des graines de maïs enrobées référencées MCOAT05A-1 et MCOAT5A-I selon la nature de la formulation vaporisée.

### Essais de germination et de répulsion

### Essais de germination

20 graines de maïs enrobées par chaque traitement sont placées dans des pots de terreau. Ces pots sont arrosés et maintenus à 25 °C à la lumière ambiante. Un essai témoin est réalisé en parallèle dans les mêmes conditions avec des graines non traitées (TNT) et un autre essai témoin est réalisé avec des graines traitées avec 0,1 % du mélange terpénique pur (TT). On compte ensuite le nombre de graines non germées au bout de 10 jours.

### Essais de répulsion

Pour tester l'effet répulsif des graines, on procède au même essai pour chaque échantillon de graines traitées.

Dans un pot carré en cellulose compressée de 8 cm de côté et 10 cm de hauteur rempli de terreau, on place une graine traitée de maïs et trois larves de taupin fraichement récupérées et conservées dans du terreau humide à 8 °C. Les larves peuvent sortir en mangeant l'enveloppe des pots. Un arrosage régulier est réalisé et les pots sont maintenus à 25 °C sous lumière naturelle. Au bout de 20 jours, on compte le nombre de taupins échappés des pots et en vidant les pots, on compte les larves encore vivantes. Pour chaque type d'enrobage, on effectue l'expérience sur 10 pots pour avoir une analyse statistique de l'effet de l'enrobage.

### Résultats

Les résultats sont rapportés dans le tableau 10 suivant.

**[Tableau 10]**

| Référence Essai | Nombre de graines germées à 10 jours | Taux de germination à 10 jours | Nombre de larves échappées | Taux de répulsion (%) | Taux de mortalité des larves (%) |
|---|---|---|---|---|---|
| TNT | 20 | 100 | NA | NA | NA |
| TT | 2 | 10 | NA | NA | NA |
| MCOAT05A | 17 | 85 | 5 | 17 | 13 |
| MCOAT05B | 18 | 90 | 8 | 27 | 10 |
| MCOAT05C | 20 | 100 | 3 | 10 | 0 |
| MCOAT05D | 20 | 100 | 5 | 17 | 0 |
| MCOAT05E | 15 | 75 | 10 | 33 | 40 |
| MCOAT05F | 13 | 65 | 4 | 13 | 33 |
| MCOAT05G | 17 | 85 | 12 | 40 | 13 |
| MCOAT05H | 14 | 70 | 4 | 13 | 30 |
| MCOAT05I | 14 | 70 | 4 | 13 | 27 |
| MCOAT5A | 13 | 65 | 3 | 10 | 27 |
| MCOAT5B | 15 | 75 | 3 | 10 | 33 |
| MCOAT5C | 20 | 100 | 10 | 33 | 0 |
| MCOAT5D | 19 | 95 | 10 | 33 | 0 |
| MCOAT5E | 12 | 60 | 3 | 10 | 83 |
| MCOAT5F | 15 | 75 | 0 | 0 | 87 |
| MCOAT5G | 13 | 65 | 4 | 13 | 80 |
| MCOAT5H | 10 | 50 | 0 | 0 | 77 |
| MCOAT5I | 11 | 55 | 0 | 0 | 73 |

| | | | | | |
|---|---|---|---|---|---|
| *NA : non-applicable* | | | | | |

Les essais TT, MCOAT05E et MCOAT5E montrent que le revêtement selon l'invention limite l'effet phytotoxique du mélange terpénique sur la graine. De manière générale, l'enrobage selon l'invention permet de limiter l'effet phytotoxique du composé sémiochimique vis-à-vis de la graine puisqu'au moins la moitié des graines germent même à des teneurs élevées de composé sémiochimique.

La protection des graines par l'enrobage a également été mise en évidence par la répulsion et la mortalité des larves induites par cet enrobage, certains composés sémiochimiques pouvant n'avoir qu'un effet répulsif, sans effet léthal.

## Revendications

1. Composition, en particulier composition agrochimique, comprenant des particules en suspension dans une phase aqueuse, dans laquelle :
lesdites particules comprennent une enveloppe solide entourant un cœur, dans lesquelles :
- l'enveloppe solide comprend au moins un copolymère de type HASE, et
- le cœur représente au moins 90% en poids, notamment de 90 à 99,5% en poids, du poids total des particules et comprend un mélange de cire, d'huile et d'un composé sémiochimique,
la phase aqueuse comprend au moins un copolymère de type ASE et une base choisie parmi l'hydroxyde d'ammonium, l'hydroxyde de sodium, l'hydroxyde de potassium et leurs combinaisons, de sorte à ce que la phase aqueuse présente un pH compris entre 7 et 9,5, de préférence entre 7 et 8.

2. Kit comprenant :
- une première composition, en particulier de type agrochimique, comprenant des particules en suspension dans une phase aqueuse, dans laquelle :
lesdites particules comprennent une enveloppe solide entourant un cœur, dans lesquelles :
· l'enveloppe solide comprend au moins un copolymère de type HASE, et
· le cœur représente au moins 90% en poids, notamment de 90 à 99,5% en poids, du poids total des particules et comprend un mélange de cire, d'huile et d'un composé sémiochimique, et
- une deuxième composition comprenant dans une phase aqueuse au moins un copolymère de type ASE et une base choisie parmi l'hydroxyde d'ammonium, l'hydroxyde de sodium, l'hydroxyde de potassium et leurs combinaisons, de sorte à ce que la phase aqueuse présente un pH compris entre 7 et 9,5, de préférence entre 7 et 8.

3. Composition selon la revendication 1 ou kit selon la revendication 2, **caractérisé en ce que** le copolymère de type HASE contient, par rapport au poids total du copolymère :
- entre 30% et 40% en poids d'unités de répétition issues d'acide méthacrylique,
- entre 45% et 60% en poids d'unités de répétition issues d'acrylate d'éthyle, et
- entre 5% et 20% en poids d'unités de répétition issues d'un macromonomère de formule Chem. 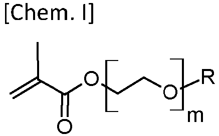 dans laquelle :
- m est un entier compris entre 1 et 40, de préférence compris entre 20 et 40, et
- R un groupement hydrocarboné de formule CₙH₂ₙ₊₁ dans lequel n est un entier compris entre 9 et 25, de préférence entre 10 et 22, et encore préférentiellement égal à 12.

4. Composition selon la revendication 1 ou 3 ou kit selon la revendication 2 ou 3, **caractérisé en ce que** le copolymère de type ASE contient, par rapport au poids total du copolymère :
- entre 20% et 60% en poids d'unités de répétition issues d'acide méthacrylique, et
- entre 40% et 80% en poids d'unités de répétition issues d'acrylate d'éthyle.

5. Composition selon l'une quelconque des revendications 1 et 3 à 4 ou kit selon l'une quelconque des revendications 2 à 4, **caractérisé en ce que** le cœur des particules contient, par rapport au poids total du cœur :
- de 25% à 90%, particulièrement de 60% à 80%, en poids d'huile,
- de 8% à 50%, particulièrement de 8% à 35%, en poids de cire, et
- de 0,1% à 25%, particulièrement de 0,5% à 20%, en poids de composé sémiochimique.

6. Composition selon l'une quelconque des revendications 1 et 3 à 5 ou kit selon l'une quelconque des revendications 2 à 5, **caractérisé en ce que** :
- la cire est choisie dans le groupe constitué par la cire d'abeille, la cire de lanoline, la cire d'insectes de Chine, la cire de riz, la cire de carnauba, la cire de candelilla, la cire de jojoba, la cire d'ouricurry, la cire d'alfa, la cire de fibres de liège, la cire de canne à sucre, la cire du Japon, la cire de sumac, la cire de montan, les cires microcristallines, et leurs mélanges ; et/ou
- l'huile est choisie dans le groupe constitué par l'huile de tournesol, l'huile d'arachide, l'huile de soja, l'huile de colza, l'huile de maïs, l'huile d'olive, l'huile de raisin, l'huile de noix, l'huile de lin, l'huile de palme, l'huile de coco, l'huile d'argan, l'huile d'avocat, l'huile d'amande, l'huile de noisette, l'huile de pistache, l'huile de riz, l'huile de coton, l'huile de germes de blé, l'huile de sésame, et leurs mélanges ; et/ou
- le composé sémiochimique est choisi parmi le thymol, le géraniol, l'alpha-pinène, le béta-pinène, le limonène, le camphre, le camphène, la sabinène, le menthol, l'eucalyptol, le β-caryophyllène, les β-ocimènes, le citronellol, le linalool et son acétate, l'acétate de lavandulyle, les terpinéols, les terpinènes, le Z-11-hexadécénal, le Z-9-tétradécénal, le n-hexanal, le 3-hexénal, l'octanal, l'acétate de 2-hexényle, l'acétate d'octényle, l'acétate d'hexadiényle, la jasmone, le jasmonate de méthyle, et un mélange de ceux-ci.

7. Procédé de préparation d'une composition selon l'une quelconque des revendications 1 et 3 à 6, comprenant les étapes suivantes :
(i) préparation d'une suspension aqueuse des particules ;
(ii) ajout de l'au moins un copolymère de type ASE ; et
(iii) ajout de la base de sorte à obtenir un pH compris entre 7 et 9,5, de préférence entre 7 et 8,
optionnellement la base de l'étape (iii) est choisie parmi l'hydroxyde d'ammonium, l'hydroxyde de sodium, l'hydroxyde de potassium et leurs combinaisons.

8. Procédé selon la revendication 7, **caractérisé en ce que** l'étape (i) comprend les étapes suivantes :
(a) préparation d'une phase grasse comprenant la cire, l'huile et le composé sémiochimique,
b) chauffage de la phase grasse à une température supérieure au point de fusion de la cire,
(c) préparation d'une solution aqueuse comprenant le copolymère de type HASE, ladite solution aqueuse ayant un pH compris entre 8 et 10,
(d) chauffage de la solution aqueuse comprenant le copolymère de type HASE à une température substantiellement identique à celle de la phase grasse,
(e) ajout de la phase grasse à la solution aqueuse comprenant le copolymère de type HASE et agitation de sorte à former une dispersion de gouttelettes de phase grasse dans la solution aqueuse, et
(f) acidification à un pH compris entre 6 et 7,5, de préférence compris entre 6,5 et 7, afin de former les particules, l'étape (f) pouvant être concomitante avec l'étape (ii).

9. Procédé de traitement d'une graine comprenant :
- l'application d'une composition selon l'une quelconque des revendications 1 et 3 à 6 sur une graine, plus particulièrement l'enrobage d'une graine avec une composition selon l'une quelconque des revendications 1 et 3 à 6,
ou
- l'application de la deuxième composition du kit selon l'une quelconque des revendications 2 à 6 sur une graine, plus particulièrement par enrobage ; puis l'application, en une ou plusieurs fois, de la première composition du kit selon l'une quelconque des revendications 2 à 6 sur la graine préalablement revêtue, en particulier enrobée, de la deuxième composition du kit.

10. Procédé selon la revendication 9, **caractérisé en ce que** la graine est en outre traitée, notamment enrobée, avec une composition autre que celle de l'une quelconque des revendications 1 et 3 à 6 ou autre que celles du kit selon l'une quelconque des revendications 2 à 6.

11. Graine enrobée avec la composition selon l'une quelconque des revendications 1 et 3 à 6 ou à l'aide d'un kit selon l'une quelconque des revendications 2 à 6.

12. Graine enrobée selon la revendication 11, **caractérisée en ce que** la graine est choisie parmi des graines de céréales telles que le maïs, le blé, l'orge, le sorgho ; des graines de plantes protéo-oléagineuses telles que le colza, le tournesol, le soja ; et des graines de plantes maraîchères telles que les carottes, les radis, les navets, les salades, les haricots, les melons, les aubergines, les courges, les courgettes, les aulx, les oignons, les poireaux.

13. Utilisation de la composition selon l'une quelconque des revendications 1 et 3 à 6 ou d'un kit selon l'une quelconque des revendications 2 à 6 pour protéger une graine, plus particulièrement destinée à être semée, et/ou un semis émergent contre un insecte ou nématode ravageur.

14. Utilisation selon la revendication 13, **caractérisée en ce que** la graine et/ou le semis émergent est une graine et/ou un semis émergent d'une plante choisie parmi les céréales telles que le maïs, le blé, l'orge, le sorgho ; les plantes protéo-oléagineuses telles que le colza, le tournesol, le soja ; et les plantes maraîchères telles que les carottes, les radis, les navets, les salades, les haricots, les melons, les aubergines, les courges, les courgettes, les aulx, les oignons, les poireaux.

15. Utilisation selon la revendication 13 ou 14, **caractérisée en ce que** l'insecte ou nématode ravageur est le ver taupin, une larve de hanneton, une larve d'otiorhynque, une larve de tipule, une larve d'hépiale, un *Ditylenchus dipsaci,* un nématode vecteur de virus tel que les Trichodorus ou les Longidoridae, un nématode générateur de kystes ou de galles sur les racines tel que les Meloidogynes ou les Globodera, ou encore un nématode qui assèche les racines tel que les nématodes du genre Pratylenchus.

## Patentansprüche

1. Zusammensetzung, insbesondere agrochemische Zusammensetzung, die in einer wässrigen Phase suspendierte Partikel umfasst, wobei:
die Partikel eine feste Hülle umfassen, die einen Kern umgibt, wobei:
- die feste Hülle mindestens ein Copolymer vom Typ HASE umfasst, und
- der Kern mindestens 90 Gew.-%, insbesondere 90 bis 99,5 Gew.-%, des Gesamtgewichts der Partikel darstellt und eine Mischung aus Wachs, Öl und einer semiochemischen Verbindung umfasst,
die wässrige Phase mindestens ein Copolymer vom Typ ASE und eine Base umfasst, die aus Ammoniumhydroxid, Natriumhydroxid, Kaliumhydroxid und deren Kombinationen ausgewählt ist, so dass die wässrige Phase einen pH-Wert zwischen 7 und 9,5, vorzugsweise zwischen 7 und 8, aufweist.

2. Set, umfassend:
- eine erste Zusammensetzung, insbesondere vom agrochemischen Typ, die in einer wässrigen Phase suspendierte Partikel umfasst, wobei:
die Partikel eine feste Hülle umfassen, die einen Kern umgibt, wobei:
- die feste Hülle mindestens ein Copolymer vom Typ HASE umfasst, und
- der Kern mindestens 90 Gew.-%, insbesondere 90 bis 99,5 Gew.-%, des Gesamtgewichts der Partikel darstellt und eine Mischung aus Wachs, Öl und einer semiochemischen Verbindung umfasst, und
- eine zweite Zusammensetzung, die in einer wässrigen Phase mindestens ein Copolymer vom Typ ASE und eine Base umfasst, die aus Ammoniumhydroxid, Natriumhydroxid, Kaliumhydroxid und deren Kombinationen ausgewählt ist, so dass die wässrige Phase einen pH-Wert zwischen 7 und 9,5, vorzugsweise zwischen 7 und 8, aufweist.

3. Zusammensetzung nach Anspruch 1 oder Set nach Anspruch 2, **dadurch gekennzeichnet, dass** das Copolymer vom Typ HASE, bezogen auf das Gesamtgewicht des Copolymers, enthält:
- zwischen 30 und 40 Gew.-% Wiederholungseinheiten, die von Methacrylsäure abgeleitet sind,
- zwischen 45 und 60 Gew.-% Wiederholungseinheiten, die von Ethylacrylat abgeleitet sind, und
- zwischen 5 und 20 Gew.-% Wiederholungseinheiten, die von einem Makromonomer der Formel Chem. I abgeleitet sind 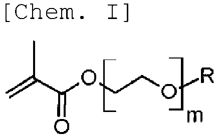 wobei:
- m eine ganze Zahl zwischen 1 und 40, vorzugsweise zwischen 20 und 40, ist, und
- R eine Kohlenwasserstoffgruppe der Formel CₙH₂ₙ₊₁ ist, wobei n eine ganze Zahl zwischen 9 und 25, vorzugsweise zwischen 10 und 22, und noch bevorzugter gleich 12 ist.

4. Zusammensetzung nach Anspruch 1 oder 3 oder Set nach Anspruch 2 oder 3, **dadurch gekennzeichnet, dass** das Copolymer vom Typ ASE, bezogen auf das Gesamtgewicht des Copolymers, enthält:
- zwischen 20 und 60 Gew.-% Wiederholungseinheiten, die von Methacrylsäure abgeleitet sind, und
- zwischen 40 und 80 Gew.-% Wiederholungseinheiten, die von Ethylacrylat abgeleitet sind.

5. Zusammensetzung nach einem der Ansprüche 1 und 3 bis 4 oder Set nach einem der Ansprüche 2 bis 4, **dadurch gekennzeichnet, dass** der Kern der Partikel, bezogen auf das Gesamtgewicht des Kerns, enthält:
- 25 bis 90 Gew.-%, insbesondere 60 bis 80 Gew.-%, Öl,
- 8 bis 50 Gew.-%, insbesondere 8 bis 35 Gew.-%, Wachs, und
- 0,1 bis 25 Gew.-%, insbesondere 0,5 bis 20 Gew.-%, semiochemische Verbindung.

6. Zusammensetzung nach einem der Ansprüche 1 und 3 bis 5 oder Set nach einem der Ansprüche 2 bis 5, **dadurch gekennzeichnet, dass**:
- das Wachs aus der Gruppe ausgewählt ist, die aus Bienenwachs, Lanolinwachs, chinesischem Insektenwachs, Reiswachs, Carnaubawachs, Candelillawachs, Jojobawachs, Ouricurry-Wachs, AlfaWachs, Korkfaserwachs, Zuckerrohrwachs, Japanwachs, Sumachwachs, Montanwachs, den mikrokristallinen Wachsen und deren Mischungen gebildet ist; und/oder
- das Öl aus der Gruppe ausgewählt ist, die aus Sonnenblumenöl, Erdnussöl, Sojaöl, Rapsöl, Maisöl, Olivenöl, Traubenkernöl, Walnussöl, Leinöl, Palmöl, Kokosöl, Arganöl, Avocadoöl, Mandelöl, Haselnussöl, Pistazienöl, Reisöl, Baumwollsamenöl, Weizenkeimöl, Sesamöl sowie deren Mischungen gebildet ist; und/oder
- die semiochimische Verbindung aus Thymol, Geraniol, Alpha-Pinen, Beta-Pinen, Limonen, Kampfer, Camphen, Sabinen, Menthol, Eucalyptol, den β-Caryophyllenen, den β-Ocimenen, Citronellol, Linalool und dessen Acetat, Lavandulylacetat, den Terpineolen, den Terpinenen, Z-11-Hexadecenal, Z-9-Tetradecenal, n-Hexanal, 3-Hexenal, Octanal, 2-Hexenylacetat, Octenylacetat, Hexadienylacetat, Jasmon, Methyljasmonat und deren Mischung ausgewählt ist.

7. Verfahren zur Herstellung einer Zusammensetzung nach einem der Ansprüche 1 und 3 bis 6, umfassend die folgenden Schritte:
(i) Herstellung einer wässrigen Suspension der Partikel;
(ii) Zugabe des mindestens einen Copolymers vom Typ ASE; und
(iii) Zugabe der Base, um einen pH-Wert zwischen 7 und 9,5, vorzugsweise zwischen 7 und 8, zu erreichen,
wobei die Base von Schritt (iii) optional aus Ammoniumhydroxid, Natriumhydroxid, Kaliumhydroxid und deren Kombinationen ausgewählt ist.

8. Verfahren nach Anspruch 7, **dadurch gekennzeichnet, dass** Schritt (i) die folgenden Schritte umfasst:
(a) Herstellung einer Fettphase, die das Wachs, das Öl und die semiochemische Verbindung umfasst,
(b) Erhitzen der Fettphase auf eine Temperatur oberhalb des Schmelzpunkts des Wachses,
(c) Herstellung einer wässrigen Lösung, die das Copolymer vom Typ HASE umfasst, wobei die wässrige Lösung einen pH-Wert zwischen 8 und 10 aufweist,
(d) Erhitzen der wässrigen Lösung, die das Copolymer vom Typ HASE umfasst, auf eine Temperatur, die im Wesentlichen mit der Temperatur der Fettphase identisch ist,
(e) Zugabe der Fettphase zu der wässrigen Lösung, die das Copolymer vom Typ HASE umfasst, und Rühren, um eine Fettphasentröpfchendispersion in der wässrigen Lösung zu bilden, und
(f) Ansäuern auf einen pH-Wert zwischen 6 und 7,5, vorzugsweise zwischen 6,5 und 7, um die Partikel zu bilden, wobei Schritt (f) gleichzeitig mit Schritt (ii) erfolgen kann.

9. Verfahren zur Behandlung eines Saatguts, umfassend:
- das Aufbringen einer Zusammensetzung nach einem der Ansprüche 1 und 3 bis 6 auf ein Saatgut, insbesondere das Umhüllen eines Saatguts mit einer Zusammensetzung nach einem der Ansprüche 1 und 3 bis 6,
oder
- das Aufbringen der zweiten Zusammensetzung des Sets nach einem der Ansprüche 2 bis 6 auf ein Saatgut, insbesondere durch Umhüllung; anschließend das einmalige oder mehrmalige Aufbringen der ersten Zusammensetzung des Sets nach einem der Ansprüche 2 bis 6 auf das zuvor mit der zweiten Zusammensetzung des Sets beschichtete, insbesondere umhüllte, Saatgut.

10. Verfahren nach Anspruch 9, **dadurch gekennzeichnet, dass** das Saatgut ferner mit einer anderen Zusammensetzung als derjenigen eines der Ansprüche 1 und 3 bis 6 oder einer anderen als denjenigen des Sets nach einem der Ansprüche 2 bis 6 behandelt, insbesondere umhüllt, wird.

11. Umhülltes Saatgut mit der Zusammensetzung nach einem der Ansprüche 1 und 3 bis 6 oder mit Hilfe eines Sets nach einem der Ansprüche 2 bis 6.

12. Umhülltes Saatgut nach Anspruch 11, **dadurch gekennzeichnet, dass** das Saatgut aus Getreidesaatgut wie Mais, Weizen, Gerste und Sorghum; Saatgut von Eiweiß- und Ölpflanzen wie Raps, Sonnenblume und Soja; und Saatgut von Gemüsepflanzen wie Möhren, Radieschen, Rüben, Salate, Bohnen, Melonen, Auberginen, Kürbisse, Zucchini, Knoblauch, Zwiebeln und Lauch ausgewählt ist.

13. Verwendung der Zusammensetzung nach einem der Ansprüche 1 und 3 bis 6 oder eines Sets nach einem der Ansprüche 2 bis 6 zum Schutz eines Saatguts, das insbesondere zur Aussaat bestimmt ist, und/oder aufgehender Keimlinge gegen ein Schadinsekt oder einen Schadnematoden.

14. Verwendung nach Anspruch 13, **dadurch gekennzeichnet, dass** das Saatgut und/oder die aufgehenden Keimlinge ein Saatgut und/oder ein aufgehender Keimling einer Pflanze ist, die aus Getreidearten wie Mais, Weizen, Gerste, Sorghum; Eiweiß- und Ölpflanzen wie Raps, Sonnenblume, Soja; und Gemüsepflanzen wie Möhren, Radieschen, Rüben, Salate, Bohnen, Melonen, Auberginen, Kürbisse, Zucchini, Knoblauch, Zwiebeln, Lauch ausgewählt ist.

15. Verwendung nach Anspruch 13 oder 14, **dadurch gekennzeichnet, dass** das Schadinsekt oder der Schadnematode ein Drahtwurm, eine Maikäferlarve, eine Rüsselkäferlarve, eine Schnakenlarve, eine Hepialidenlarve, ein Ditylenchus dipsaci, ein virusübertragender Nematode wie Trichodorus oder die Longidoridae, ein Nematode, der Zysten oder Gallen an den Wurzeln bildet, wie die Meloidogynes oder die Globodera, oder auch ein Nematode, der die Wurzeln austrocknet, wie die Nematoden der Gattung Pratylenchus, ist.

## Claims

1. A composition, in particular an agrochemical composition, comprising particles suspended in an aqueous phase, wherein:
said particles comprise a solid envelope surrounding a core, wherein:
- the solid envelope comprises at least one HASE copolymer, and
- the core represents at least 90% by weight, in particular from 90 to 99.5% by weight, of the total weight of the particles and comprises a mixture of wax, oil and a semiochemical compound,
the aqueous phase comprises at least one ASE copolymer and a base selected from ammonium hydroxide, sodium hydroxide, potassium hydroxide and combinations thereof, such that the aqueous phase has a pH of between 7 and 9.5, preferably between 7 and 8.

2. A kit comprising:
- a first composition, in particular of the agrochemical type, comprising particles suspended in an aqueous phase, wherein:
said particles comprise a solid envelope surrounding a core, wherein:
· the solid envelope comprises at least one HASE copolymer, and
· the core represents at least 90% by weight, in particular from 90 to 99.5% by weight, of the total weight of the particles and comprises a mixture of wax, oil and a semiochemical compound, and
- a second composition comprising, in an aqueous phase, at least an ASE copolymer and a base selected from ammonium hydroxide, sodium hydroxide, potassium hydroxide and combinations thereof, so that the aqueous phase has a pH of between 7 and 9.5, preferably between 7 and 8.

3. The composition according to claim 1 or the kit according to claim 2, **characterized in that** the HASE copolymer contains, based on the total weight of the copolymer:
- between 30% and 40% by weight of repeating units derived from methacrylic acid,
- between 45% and 60% by weight of repeating units derived from ethyl acrylate, and
- between 5% and 20% by weight of repeating units derived from a macromonomer of the formula Chem. I: 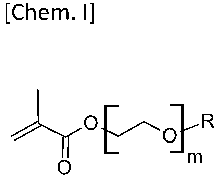 wherein:
- m is an integer between 1 and 40, preferably between 20 and 40, and
- R a hydrocarbon group of formula CₙH₂ₙ₊₁ in which n is an integer between 9 and 25, preferably between 10 and 22 and even more preferably equal to 12.

4. The composition according to claim 1 or 3 or the kit according to claim 2 or 3, **characterized in that** the ASE copolymer contains, based on the total weight of the copolymer:
- between 20% and 60% by weight of repeating units derived from metacrylic acid, and
- between 40% and 80% by weight of repeating units derived from ethyl acrylate.

5. The composition according to any one of claims 1 and 3 to 4 or the kit according to any one of claims 2 to 4, **characterized in that** the core of the particles contains, based on the total weight of the core:
- from 25% to 90%, particularly from 60% to 80%, by weight of oil,
- from 8% to 50%, particularly from 8% to 35%, by weight of wax, and
- from 0.1% to 25%, particularly from 0.5% to 20%, by weight of semiochemical compound.

6. The composition according to any one of claims 1 and 3 to 5 or the kit according to any one of claims 2 to 5, **characterized in that**:
- the wax is selected from the group consisting of beeswax, lanolin wax, Chinese insect wax, rice wax, carnauba wax, candelilla wax, jojoba wax, ouricurry wax, esparto wax, cork fiber wax, sugar cane wax, Japan wax, sumac wax, montan wax, microcrystalline waxes, and mixtures thereof; and/or
- the oil is selected from the group consisting of sunflower oil, peanut oil, soybean oil, rapeseed oil, corn oil, olive oil, grape oil, walnut oil, linseed oil, palm oil, coconut oil, argan oil, avocado oil, almond oil, hazelnut oil, pistachio oil, rice oil, cottonseed oil, wheat germ oil, sesame oil, and mixtures thereof; and/or
- the semiochemical compound is selected from thymol, geraniol, alpha-pinene, beta-pinene, limonene, camphor, camphene, sabinene, menthol, eucalyptol, β-caryophyllene, β-ocimenes, citronellol, linalool and its acetate, lavandulyl acetate, terpineols, terpinenes, Z-11-hexadecenal, Z-9-tetradecenal, n-hexanal, 3-hexenal, octanal, 2-hexenyl acetate, octenyl acetate, hexadienyl acetate, jasmone, methyl jasmonate, or mixture thereof.

7. A method of preparing a composition according to any one of claims 1 and 3 to 6, comprising the following steps:
(i) preparing an aqueous suspension of the particles;
(ii) adding the at least one ASE copolymer; and
(iii) adding the base so as to obtain a pH between 7 and 9.5, preferably between 7 and 8,
optionally, the base of step (iii) is selected from ammonium hydroxide, sodium hydroxide, potassium hydroxide and combinations thereof.

8. The method according to claim 7, **characterized in that** step (i) comprises the following steps:
(a) preparing a fatty phase comprising the wax, the oil and the semiochemical compound,
b) heating the fatty phase at a temperature above the melting point of the wax,
(c) preparing an aqueous solution comprising the HASE copolymer, said aqueous solution having a pH between 8 and 10,
(d) heating the aqueous solution comprising the HASE copolymer at a temperature substantially identical to that of the fatty phase,
(e) adding the fatty phase to the aqueous solution comprising the HASE copolymer and stirring so as to form a dispersion of fatty phase droplets in the aqueous solution, and
(f) acidifying at a pH between 6 and 7.5, preferably between 6.5 and 7, to form the particles, step (f) can be concomitant with step (ii).

9. A method of treating a seed comprising:
- the application of a composition according to any one of claims 1 and 3 to 6 to a seed, more particularly coating a seed with a composition according to any one of claims 1 and 3 to 6, or
- the application of the second composition of the kit according to any one of claims 2 to 6 to a seed, more particularly by coating; then the application, in one or more times, of the first composition of the kit according to any one of claims 2 to 6 to the seed previously covered, in particular coated, with the second composition of the kit.

10. The method according to claim 9, **characterized in that** the seed is further treated, in particular coated, with a composition other than the composition of any of claims 1 and 3 to 6 or other than those of the kit according to any one of claims 2 to 6.

11. A seed coated with the composition of any one of claims 1 and 3 to 6 or using the kit according to any one of claims 2 or 6.

12. The seed coated according to claim 11, **characterized in that** the seed is selected among cereal seeds such as corn, wheat, barley, sorghum; seeds of protein-oleaginous plants such as colza, sunflower, soya; and seeds of vegetable plants such as carrots, radishes, turnips, salads, beans, melons, eggplants, squashes, zucchinis, garlics, onions, leeks.

13. A use of the composition according to any one of claims 1 and 3 to 6 or of the kit according to any one of claims 2 to 6 to protect a seed, more particularly intended to be sown, and/or an emerging seedling against a pest insect or nematode.

14. The use according to claim 16, **characterized in that** the seed and/or emerging seedling is a seed and/or emerging seedling of a plant selected from cereals such as corn, wheat, barley, sorghum; protein-oil plants such as rapeseed, sunflower, soybean; and vegetable plants such as carrots, radishes, turnips, salads, beans, melons, eggplants, squashes, zucchini, garlic, onions, leeks.

15. The use according to claim 13 or 14, **characterized in that** the pest insect or nematode is the wireworm, beetle larvae, otiorhynchus larvae, tipula larvae, hepiale larvae, *Ditylenchus dipsaci,* nematodes vectors of virus such as Trichodorus or Longidoridae, nematodes generating cysts or galls on roots such as Meloidogynes or Globodera, or nematodes that dry out roots such as nematodes of the genus Pratylenchus.
